# EUROPEAN PATENT SPECIFICATION

(11) **EP 0 322 975 B1**
(45) Date of publication and mention of the grant of the patent: **10.11.1993**
(21) Application number: 88202985.3
(22) Date of filing: 20.12.1988
(51) Int. Cl.: B01D 71/38, C08G 67/02

(54) **Polyketone membranes**
Polyketon-Membranen
Membranes en polycétone

(30) Priority: 30.12.1987 US 139487
(43) Date of publication of application: 05.07.1989
(73) Proprietor: SHELL INTERNATIONALE RESEARCH MAATSCHAPPIJ B.V., 2596 HR Den Haag (NL)
(72) Inventor: Handlin, Dale Lee Jr., Houston, TX 77077 (US)

(56) References cited:
- EP-A- 0 214 859
- EP-A- 0 215 346
- US-A- 2 495 286
- US-A- 4 699 857

## Description

This invention is concerned with a separation membrane and a process for its preparation.

More generally, this invention relates to microporous polymer structures that may be readily prepared and are characterized by relatively homogeneous, three-dimensional, cellular microstructures and to a unique, facile process for preparing such polymer structures.

All references to a cell size throughout this application, relate to the average diameter of such cells, in microns, unless otherwise stated. All references to a "non-continuous" membrane relate to a membrane which has cells extending entirely through the thickness of the membrane, from one side to the other. Such polymeric membranes are known per se, made from relatively expensive materials such as copoly(acrylonitrile allylsulphonate), or from inexpensive but less reliable materials such as cellophane.

Accordingly, there is a need for superior membranes of good solvent resistance, high melting point, good mechanical strength, low toxicity (if used in nutritional processes) and low cost. It has been found that polyketones (linear alternating copolymers of carbon monoxide and olefinically unsaturated compounds) are very suited for this purpose.

The present invention thus relates to a microporous non-continuous separation membrane having average cell sizes in the range of 0.1 to 10 microns (µm), characterized in that the membrane is made from one or more linear, alternating copolymers of carbon monoxide and at least one ethylenically unsaturated compound. Such a membrane is obtainable, preferably, by:
- mixing at least one linear alternating copolymer of carbon monoxide and at least one ethylenically unsaturated compound with a solvent forming a solution;
- casting said solution on a substrate; and
- removing at least a portion of said solvent.

The present invention also relates to a process for the preparation of a microporous non-continuous separation membrane having cell sizes in the range of 0.1 to 10 microns, characterized by comprising the steps of:
- mixing one or more linear alternating copolymers of carbon monoxide and at least one ethylenically unsaturated compound with a solvent forming a solution;
- casting said solution on a substrate; and
- removing at least a portion of said solvent therein.

Polyketones have generally not been used as separation membranes. Their excellent strength, good solvent resistance, high melting point and hydrophilic nature now were found to make them very suitable for microfiltration applications. Because of their pore size ranges, they are also suitable for ultrafiltration (polymer separation according to molecular weight) and reverse osmosis especially gas-gas separations by reverse osmosis using a so-called asymmetric membrane. They have a narrow cell size distribution, as determined by electron microscopic analysis.

The present invention is particularly characterized by average cell sizes which range from 0.1 to 10 microns, with 0.1 to 6 micron cell sizes being preferred for certain end use applications, and 0.1 to 2 microns being preferred for other end uses.

Usable polyketone polymers can be typically produced by contacting the carbon monoxide and the ethylenically unsaturated compound(s) under polymerization conditions in the presence of a catalytic amount of a catalyst formed from a compound of the Group VIII metals palladium, cobalt or nickel, the anion of a non-hydrohalogenic acid of a pKa less than about 6, preferably less than about 2, and a bidentate ligand of phosphorus, arsenic or antimony.

Production of these polymers is illustrated, for example, by published European Patent Applications 181,014 and 121,965.

The physical properties of the polyketone polymer usable in the separation membranes will be determined by the molecular weight, by whether the polymer is a copolymer or a terpolymer or other type of interpolymer, by melting points and by the actual monomer structure. It is preferred to use for the novel membranes, polyketone polymers with melting points in the range of from 175°C to 300°C, more typically from 210°C to 280°C.

The structure of the preferred polyketone polymer usable herein is that of a linear alternating copolymer or terpolymer of carbon monoxide, ethylene and optionally any second ethylenically unsaturated hydrocarbon. Polyketone terpolymers usable herein include terpolymers of carbon monoxide, ethylene and a second ethylenically unsaturated hydrocarbon of at least 3 carbon atoms, wherein there are at least two units incorporating moieties of ethylene per unit incorporating a moiety of the second unsaturated hydrocarbon, preferably from about 10 units to about 100 units incorporating moieties of ethylene per unit incorporating a moiety of the second unsaturated hydrocarbon. The polymer chain of the preferred class of polymers is illustrated by the formula 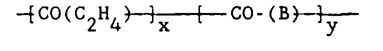
wherein B is the moiety obtained by polymerization of the second ethylenically unsaturated hydrocarbon through the ethylenic unsaturation. The -CO(C₂H₄)̵ units and the -CO(B)̵ units (if present) occur randomly throughout the polymer molecule and the ratio of y:x is no more than 0.5. In the modification of the invention which employs copolymers of carbon monoxide and ethylene without the presence of a second ethylenically unsaturated hydrocarbon, the term y=0 and the ratio of y:x is also 0. When terpolymers are employed, i.e., y is greater than 0, ratios of y:x from about 0.01 to about 0.1 are preferred. The end groups or "caps" of the polymer chain will depend on the particular materials present during its production and whether and how the polymer has been purified. The precise nature of the end groups is of little significance with regard to the overall properties of the polymer so that the polymer is fairly represented by the polymer chain as depicted above.

Preferred polyketone polymers usable to prepare these unique separation membranes are copolymers of carbon monoxide and ethylene or terpolymers of carbon monoxide, ethylene and a second aliphatic alpha-olefin like propylene. Olefins having 3 or more carbon atoms are particularly usable as the second alpha-olefin herein.

Useful polyketones for separation membranes have limiting viscosity numbers (LVN) as measured by the method wherein the polymer is dissolved in metacresol at 100°C, using a standard capillary viscosity measuring device, (such as a Cannon-Ubbelohde viscometer) in the range of 0.5 to 10 LVN and more preferably 0.8 to 4 LVN.

It has been found in accordance with the instant invention that the desired separation membranes can be obtained from solution cast films of (a) a polyketone polymer as described above, in (b) a solvent, e.g. hexafluoroisopropanol (HFIPA), meta-cresol (m-cresol) and/or ortho-chlorophenol. Components (a) and (b) are blended together in relative proportions, preferably 0.01 to 1 gram of (a) per 1-50 ml of (b) to form a solution. The solution is cast on a substrate to form a solid material.

For these separation membranes, it has been discovered that component (a) can be a blend of two or more polyketone polymers having different molecular weights or different melting points. For example, a polyketone having a low melting point (prepared from a polyketone having a larger termonomer content) can be added to a second polyketone polymer with a higher melting point, and dry blended. The blending of the polyketones may be carried out in solution too.

The most preferred blend usable to prepare separation membranes can be prepared with about 0.01 grams of a polyketone polymer, such as a terpolymer of carbon monoxide, propylene and ethylene, or a copolymer of carbon monoxide and propylene hereinafter identified as component (a), per ml of a component (b), which is preferably hexafluoroisopropanol (HFIPA). It has been discovered that 5-20%, preferably 10% (by volume) solutions of polyketone polymer with HFIPA, when cast onto glass, using a doctor blade, (a sort of scraper) are excellently suited to prepare separation membranes of attractive qualities. It may take several, e.g. up to 4 hours, to form the appropriate solution of polymer with HFIPA. Blending of solvent and polymer can be achieved by the "wrist-shaker" method, well known in the art.

After the compatible liquid and the polyketone polymer are selected, the actual concentration of polymer and liquid which will be utilized must be determined. In addition to considering, for example, the theoretically possible concentration range, other functional considerations should be employed in determining the proportions used for a particular system. Insofar as the maximum amount of liquid which should be utilized is concerned, the resulting strength characteristics of the membrane must be taken into account. More particularly, the amount of liquid used should accordingly allow the resulting microporous structure to have sufficient minimum "handling strength" to avoid collapse of the microporous or cellular structure. On the other hand, the selection of the maximum amount of polymer may depend on viscosity limitations of the particular equipment utilized.

The relative amount of liquid used will also, to some extent, be dependent upon the desired effective size of the membrane cells for use in the ultimate end-use application. It should be noted that the average cell size tends to increase somewhat with increasing liquid content.

Following the formation of the polyketone solution, the same may then be processed to provide a membrane of any desired shape or configuration. In general, and depending upon the particular system involved, the thickness of the membrane can vary from a thin film of about 10 to 500 micron in thickness.

Increased thicknesses may also be achieved by the addition of minor amounts of thixotropic materials. For example, the addition of commercially available fillers significantly increases useful thicknesses yet does not adversely affect the characteristic microporous structure. The particular amounts to be used can be readily determined.

Having formed the solution of polymer and liquid and cast the solution to produce a material having suitable handling strength, the cast solution may be thereafter formed by removing at least a portion of the liquid, preferably by extraction, using non-solvents. Non-solvents usable to remove the liquid from the membrane include isopropyl alcohol, acetone, water, and other polar solvents which are miscible with the solvent used in association with the polyketone polymer. Removal of the solvent by evaporation is possible, but is not preferred as it does not render the membrane as porous as usually desired.

The average size of the cells in the resulting non-continuous structure can range from about 0.1 to about 10 microns, with from about 0.1 to about 6 microns being a range usable herein. As indicated, the cell size of the resulting membrane may vary depending on the particular polyketone and compatible liquid utilized and the ratio of the polymer to liquid.

For any of the microporous polymers made in accordance with the present invention, the particular end use application will typically determine the amount of void space and cell size requirements for the membrane. For example, for prefilter applications, the cell size may typically be above 6 microns, while in microfiltration the cell sizes may be in the range of about 0.1 to about 2 microns. For reverse osmosis applications, it may be useful to make a so-called asymmetric membrane, consisting of two layers prepared by the present process, one of which was freed of the solvent by extraction with a non-solvent, the other having been freed of the solvent by evaporation. Depending on pore size, gas separations, e.g. CO₂-CH₄ separations, are feasible herewith.

### EXAMPLE

The following membranes were prepared to illustrate the invention.

### Membrane A:

1.0 gram polyketone powder, consisting of a linear alternating copolymer of carbon monoxide and ethylene produced in the presence of a catalyst composition formed from palladium acetate, the anion of trifluoroacetic acid and 1,3-bis[bis(2-methoxyphenyl)phosphino]propane, with a melting point of 257°C and a LVN (limiting viscosity number) of 3.05 as measured at 100°C in m-cresol, was dissolved in 10 ml hexafluoroisopropanol solvent, forming a solution. The solution was cast onto a glass substrate using a 0.25 mm doctor blade. A membrane or film formed and the film was placed in a non-solvent of isopropyl alcohol at room temperature for 1-10 minutes removing all of the HFIPA from the membrane and leaving a unique microporous polyketone non-continuous membrane with a 1.0 to 5 micron cell size, and a high melting point, of at least 250°C.

### Membrane B:

Membrane B was prepared by following the procedure for the preparation of Membrane A, with the only difference that as non-solvent water was used instead of isopropanol, yielding a microporous polyketone non-continuous membrane with a 0.1 to 2 micron cell size, and a high melting point, of at least 250°C.

### Membrane C:

The procedure for the preparation of Membrane A was followed, except that the film was placed in a non-solvent of isopropyl alcohol at -20°C instead of room temperature, yielding a microporous polyketone non-continuous membrane with a 5 to 10 micron cell size, and a high melting point, of at least 250°C.

### Membrane D:

The procedure for the preparation of Membrane A was followed, except that the film was placed in a non-solvent of isopropyl alcohol at 65°C instead of room temperature, yielding a microporous polyketone non-continuous membrane with a 0.1 to 2 micron cell size, and a high melting point, of at least 250°C.

## Claims

1. Microporous non-continuous separation membrane having average cell sizes in the range of 0.1-10 microns, characterized in that the membrane is made from one or more linear, alternating copolymers of carbon monoxide and at least one ethylenically unsaturated compound.

2. A membrane as claimed in claim 1, characterized in being obtainable by:
- mixing at least one linear alternating copolymer of carbon monoxide and at least one ethylenically unsaturated compound with a solvent forming a solution;
- casting said solution on a substrate; and
- removing at least a portion of said solvent.

3. A membrane as claimed in claim 1 or 2, characterized in that the linear alternating copolymer of carbon monoxide is of the formula 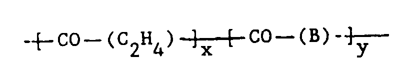 wherein B is the moiety of an ethylenically unsaturated alpha-olefin of at least 3 carbon atoms polymerized through the ethylenic unsaturation, and the ratio of y:x is no more than 0.5.

4. Process for the preparation of a microporous non-continuous separation membrane having average cell sizes in the range of 0.1 to 10 microns, characterized by comprising the steps of:
- mixing one or more linear, alternating copolymers of carbon monoxide and at least one ethylenically unsaturated compound with a solvent forming a solution;
- casting said solution on a substrate; and
- removing at least a portion of said solvent therein.

5. A process as claimed in claim 4, characterized in that the solvent is selected from the group: meta-cresol, hexafluoroisopropanol, and ortho-chlorophenol.

6. A process as claimed in claim 4 or 5, characterized in that at least a portion of said solvent is removed by extraction.

7. A process as claimed in claim 6, characterized in that the extraction is performed with a member of the group comprising: isopropyl alcohol, water, acetone, and mixtures thereof.

8. A process as claimed in any of claims 4-7, characterized in that the substrate is glass.

## Patentansprüche

1. Mikroporöse diskontinuierliche Trennmembran mit mittleren Zellengrößen im Bereich von 0,1 bis 10 µm, dadurch gekennzeichnet, daß die Membran aus einem oder aus mehreren linearen, alternierenden Copolymeren aus Kohlenmonoxid und wenigstens einer ethylenisch ungesättigten Verbindung besteht.

2. Membran nach Anspruch 1, dadurch gekennzeichnet, daß sie durch
- Mischen wenigstens eines linearen, alternierenden Copolymers von Kohlenmonoxid mit wenigstens einer ethylenisch ungesättigten Verbindung mit einem Lösungsmittel unter Ausbildung einer Lösung;
- Gießen dieser Lösung auf ein Substrat; und
- Abtrennen wenigstens eines Teiles dieses Lösungsmittels erhältlich ist.

3. Membran nach Anspruch 1 oder 2, dadurch gekennzeichnet, daß das lineare, alternierende Copolymer von Kohlenmonoxid der Formel 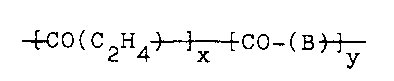 entspricht, worin B der Rest eines ethylenisch ungesättigten α-Olefins von wenigstens 3 Kohlenstoffatomen, polymerisiert über die ethylenische Unsättigung, ist und das Verhältnis von y zu x nicht über 0,5 liegt.

4. Verfahren zur Herstellung einer mikroporösen diskontinuierlichen Trennmembran mit durchschnittlichen Zellengrößen im Bereich von 0,1 bis 10 µm, dadurch gekennzeichnet, daß es die folgenden Stufen umfaßt:
- Mischen eines oder mehrerer linearer, alternierender Copolymere von Kohlenmonoxid mit wenigstens einer ethylenisch ungesättigten Verbindung mit einem Lösungsmittel unter Ausbildung einer Lösung;
- Gießen dieser Lösung auf ein Substrat; und
- Abtrennen wenigstens eines Teils des darin enthaltenen Lösungsmittels.

5. Verfahren nach Anspruch 4, dadurch gekennzeichnet, daß das Lösungsmittel aus der Gruppe m-Cresol, Hexafluorisopropanol und ortho-Chlorphenol ausgewählt ist.

6. Verfahren nach Anspruch 4 oder 5, dadurch gekennzeichnet, daß wenigstens ein Teil dieses Lösungsmittels durch Extraktion entfernt wird.

7. Verfahren nach Anspruch 6, dadurch gekennzeichnet, daß die Extraktion mit einem Glied aus der Isopropylalkohol, Wasser, Aceton und Gemische hievon umfassenden Gruppe vorgenommen wird.

8. Verfahren nach einem der Ansprüche 4 bis 7, dadurch gekennzeichnet, daß das Substrat Glas ist.

## Revendications

1. Membrane de séparation, non continue, microporeuse, possédant des dimensions moyennes d'alvéoles comprises dans l'intervalle de 0,1 - 10 microns, caractérisée en ce que l'on prépare la membrane à partir d'un ou plusieurs copolymères alternés, linéaires, de monoxyde de carbone et d'au moins un composé à insaturation éthylènique.

2. Membrane selon la revendication 1, caractérisée en ce qu'on l'obtient par :
- le mélange d'au moins un copolymère alterné linéaire de monoxyde de carbone et d'au moins un composé à insaturation éthylènique avec un solvant formant une solution ;
- le coulage de ladite solution sur un substrat ; et
- l'élimination d'au moins une portion dudit solvant.

3. Membrane selon la revendication 1 ou 2, caractérisée en ce que le copolymère alterné, linéaire, de monoxyde de carbone répond à la formule 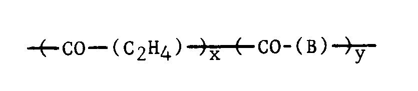 dans laquelle B est le fragment d'une alpha-oléfine à insaturation éthylènique ayant au moins 3 atomes de carbone, polymérisée par l'insaturation éthylènique, et le rapport de y : x est d'au plus 0,5.

4. Procédé de préparation d'une membrane de séparation, non continue, microporeuse, ayant des dimensions moyennes d'alvéoles comprises dans l'intervalle de 0,1 à 10 microns, caractérisé en ce qu'il comprend les étapes de :
- mélange d'un ou plusieurs copolymères alternés, linéaires, du monoxyde de carbone et d'au moins un composé à insaturation éthylènique, avec un solvant formant une solution ;
- coulage de ladite solution sur un substrat ; et
- élimination d'au moins une portion dudit solvant de celle-ci.

5. Procédé selon la revendication 4, caractérisé en ce que le solvant est choisi dans le groupe comprenant le méta-crésol, l'hexafluoroisopropanol et l'ortho-chlorophénol.

6. Procédé selon la revendication 4 ou 5, caractérisé en ce que l'on élimine au moins une portion dudit solvant, par extraction.

7. Procédé selon la revendication 6, caractérisé en ce que l'on effectue l'extraction à l'aide d'un représentant choisi dans le groupe comprenant l'alcool isopropylique, l'eau, l'acétone et leurs mélanges.

8. Procédé selon l'une quelconque des revendications 4 - 7, caractérisé en ce que le substrat est le verre.
